# FASCICULE DE BREVET EUROPEEN

(11) **EP 2 782 974 B1**
(45) Date de publication et mention de la délivrance du brevet: **06.03.2019**
(21) Numéro de dépôt: 12790887.9
(22) Date de dépôt: 21.11.2012
(51) Int. Cl.: C09K 11/02, C09K 11/77, G21K 4/00, G01N 21/62, G01N 23/05, G01T 3/06

(54) **DISPOSITIF DESTINE A DE L'IMAGERIE NEUTRONIQUE EN MILIEU IMMERGE ET PROCEDE D'IMAGERIE UTILISANT LEDIT DISPOSITIF**
VORRICHTUNG FÜR NEUTRONENBILDER IN EINER IMMERSION UND BILDGEBUNGSVERFAHREN MIT DIESER VORRICHTUNG
DEVICE FOR NEUTRON IMAGERY IN IMMERSION AND IMAGING METHOD USING SAID DEVICE

(30) Priorité: 22.11.2011 FR 1160623
(43) Date de publication de la demande: 01.10.2014
(73) Titulaire: Commissariat à l'Énergie Atomique et aux Énergies Alternatives, 75015 Paris (FR)
(72) Inventeur: SIMON, Eric, F-84120 Pertuis (FR)
(74) Mandataire: Esselin, Sophie
(86) Numéro de dépôt international: PCT/EP2012/073236
(87) Numéro de publication internationale: WO 2013/076142

(56) Documents cités:
- DE-A1- 19 644 522
- US-A- 3 891 852
- US-A1- 2003 155 530

## Description

Le domaine de l'invention est celui du contrôle non destructif d'objets irradiants et utilisant l'imagerie neutronographique.

La neutronographie est une technique de contrôle non destructif analogue dans son principe à la radiographie aux rayons X. Un faisceau de neutrons mis en forme à partir d'une source est utilisé pour fournir une image par transparence de l'objet examiné.

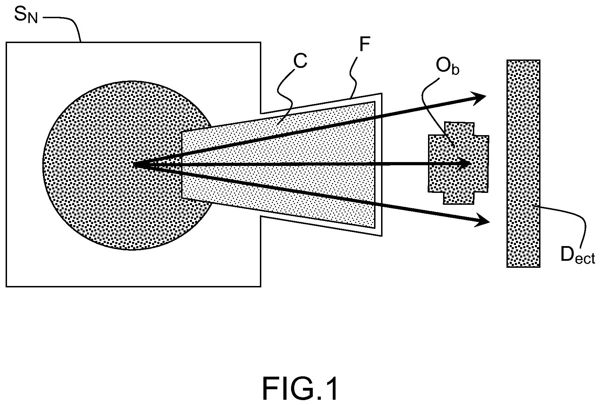

Une installation classique de neutronographie peut être schématisée par la figure 1 qui met en évidence : une source de neutrons S_{N} placée dans un milieu modérateur, destiné à abaisser l'énergie des neutrons qui sont produits. A une distance calculée de cette source est disposée la fenêtre d'entrée d'un collimateur C qui met en forme le faisceau. Sur cette figure, on a représenté un collimateur de forme divergente. Le collimateur est équipé d'un filtre F en matériau devant faire barrage au rayonnement gamma pouvant accompagner l'émission neutronique. Le collimateur comporte des parois internes absorbant les neutrons et un gaz de remplissage transparent aux neutrons. A la sortie du collimateur, les neutrons interagissent avec l'objet en examen Ob, ceux qui sont transmis à travers celui-ci sont absorbés par un détecteur D_{ect} pour former l'image. L'utilisation d'un élément modérateur est en effet nécessaire dans la mesure généralement où les sources neutroniques émettent un spectre de neutrons rapides qui est très rarement adapté pour faire de l'imagerie. Il convient alors de ralentir les neutrons dans un milieu appelé modérateur entourant la source rapide. Ce procédé entraîne malheureusement des pertes considérables d'intensité car le modérateur n'est pas totalement transparent aux neutrons et des captures parasites s'y produisent toujours. Dans le modérateur, les neutrons sont ralentis par chocs successifs accompagnés de transferts d'énergie aux atomes du milieu.

L'objet ainsi analysé et traversé par un flux neutronique génère une image qui lui est propre. En effet, l'interaction des neutrons dans la matière se caractérise par des phénomènes de diffusion et d'absorption. Les neutrons ont en particulier la capacité de détecter des atomes d'hydrogène dans des milieux à travers des structures métalliques, l'analyse peut être menée par l'atténuation spatiale et temporelle du faisceau de neutrons.

Les réacteurs nucléaires de recherche, producteurs de flux neutroniques très importants sont les installations les mieux placées pour produire des neutronographies de très bonne qualité. De fait, ils occupent une très grande place parmi les installations ayant une vocation de contrôle non destructif de production.

Les neutrons étant des particules indirectement ionisantes, leur détection directe est assez difficile. Pour pallier ce handicap, on utilise au niveau du détecteur, un matériau à très haute section efficace (probabilité d'interaction) de capture neutronique pour avoir un bon rendement, cette capture s'accompagnant d'une émission secondaire de particules ionisantes pouvant exciter les détecteurs traditionnels : films photographiques, scintillateurs (matériau qui émet de la lumière suite à l'interaction d'un rayonnement ionisant (photon ou particule chargée). En effet la lumière de scintillation est produite non seulement par absorption mais aussi par d'autres types d'interactions de rayonnements ionisants comme la diffusion, par exemple

Dans le domaine nucléaire, deux types d'installations de neutronographie existent : la neutronographie en piscine réacteur, dans laquelle le système d'imagerie est installé au plus près du coeur du réacteur au sein même de la piscine (le système est immergé, c'est le cas par exemple du système de neutronographie d'OSIRIS en France ou du HFR à Petten aux Pays-Bas) et la neutronographie hors réacteur, dans laquelle le faisceau de neutrons est extrait du réacteur pour former un faisceau sortant de la piscine réacteur (système de neutronographie de ORPHEE par exemple).

OSIRIS est un réacteur expérimental d'une puissance thermique de 70 mégawatts. C'est un réacteur de type piscine à eau légère et à coeur ouvert dont le but principal est d'effectuer des essais et d'irradier sous haut flux de neutrons des éléments combustibles et des matériaux de structure des centrales électronucléaires de puissance ainsi que de produire des radioéléments.

Dans le cas de l'examen de combustibles irradiés, le système neutronographique adapté est une neutronographie immergée, pour des raisons évidentes liées au caractère irradiant de l'objet examiné.

La contrainte forte associée à ce type d'imagerie neutronographique immergée en piscine réacteur d'objets fortement irradiants est liée au type de détecteur utilisé pour former l'image neutronographique. Du fait de l'environnement radiatif, ce dernier doit être insensible au rayonnement gamma pour ne conserver que le signal utile (interactions des neutrons thermiques). Actuellement, le dispositif utilisé dans le cadre d'OSIRIS et ce pour réaliser l'analyse de neutronographie et mise en place sur le fond de la piscine est constitué de trois parties principales :
- un collimateur pyramidal dont le sommet est légèrement tronqué où on trouve une plaque d'alliage d'aluminium constituant la plage d'entrée des neutrons ;
- à l'arrière du collimateur, se trouve la chambre qui accueille l'objet à examiner ;
- le support situé à l'arrière de la chambre reçoit une cassette métallique contenant un convertisseur capable de convertir un flux neutronique en rayonnement β. La cassette assure une fonction de caisson d'isolement vis-à-vis du convertisseur de neutrons destiné à être immergé au cours de la phase d'irradiation.

L'ensemble est mobile et peut avancer ou reculer vers le coeur du réacteur. La technique est dite de transfert car l'image radiographique est obtenue à la suite de deux séquences consécutives :
- l'irradiation du convertisseur ;
- l'exposition d'un film photographique après transfert de la cassette hors de la piscine pour imager l'activité de rayonnement β du convertisseur.

Cette méthode permettant de ne conserver que le signal neutronique est ainsi fondée sur une production de l'image en deux temps, après un transfert d'une partie du système hors piscine réacteur : un convertisseur activable est exposé au flux neutronique en aval de l'objet inspecté, puis ce convertisseur est transféré hors piscine pour imager son activité (activité bêta), ce qui fournit une image en transmission de l'absorption neutronique de l'objet inspecté. Elle présente les avantages de pouvoir contrôler un objet directement au voisinage du coeur sans le sortir de la piscine et de pouvoir imager des objets hautement radioactifs car le film photographique n'est jamais au voisinage de ceux-ci. Ainsi les crayons combustibles irradiés dans un dispositif expérimental OSIRIS peuvent subir une neutronographie avant et après irradiation ce qui permet de voir les modifications de l'état du combustible et l'effet de l'irradiation.

Néanmoins, les systèmes permettant la production d'images neutronographiques dans ces conditions, nécessitent l'emploi d'un système transférable hors piscine réacteur de type cassette d'irradiation constituée en alliage d'aluminium ou autre matériau métallique (activable). L'activation de cette cassette impose des contraintes fortes sur le processus de mesure (retour d'expérience OSIRIS) : délais de manipulation, dosimétrie pour l'opérateur.

En outre, les méthodes de neutronographie par transfert actuellement utilisées, imposent l'application d'un convertisseur primaire de neutrons en rayonnement bêta rémanent, sur un second système permettant de produire l'image (film radiographique ou écran radio luminescent à mémoire), impliquant la nécessité d'une mise en contact la plus parfaite possible entre les deux éléments afin d'optimiser la résolution de l'image (utilisation d'une boîte à vide, ...) et de nombreuses manipulations de l'opérateur. Par exemple, le brevet US3891852 concerne la détection de neutrons et l'enregistrement d'images neutroniques, mettant en oeuvre un écran contenant un composé de gadolinium devenant fluorescent lorsqu'il est frappé par des rayons et un matériau photosensible sur lequel est projeté la lumière fluorescente résultant du choc des neutrons sur l'écran. Il peut comprendre un autre écran absorbant les neutrons, par exemple un écran en dysprosium utilisé conjointement avec l'écran de gadolinium.

C'est pourquoi et dans un contexte plus général de contrôle par des moyens non destructifs d'objets irradiants et utilisant l'imagerie neutronographique, la présente invention a pour objet un nouveau type de dispositif destiné à être immergé pour réaliser des opérations de contrôle non destructif par une imagerie neutronique perfectionnée d'espèces et notamment de combustibles nucléaires irradiés.

La présente invention peut avantageusement concerner la neutronographie immergée en piscine réacteur (visant notamment une application au futur système de neutronographie du réacteur RJH) en proposant un dispositif permettant l'obtention d'une image neutronographique de haute résolution, dans un milieu à haut flux neutronique et haut flux gamma, en piscine réacteur, et ce par un système transférable hors piscine, en garantissant une activation minimale des structures associées pour assurer la meilleure radioprotection de l'opérateur manipulant ledit système d'imagerie transféré.

Plus précisément la présente invention a pour objet un dispositif destiné à être utilisé pour réaliser de l'imagerie neutronique en immersion dans un milieu contenant des espèces à analyser, caractérisé en ce qu'il comprend un premier convertisseur comprenant un premier matériau capable de convertir un rayonnement de neutrons en rayonnement bêta rémanent, et un second convertisseur comprenant un second matériau capable de convertir un rayonnement bêta rémanent en rayonnement lumineux, ledit second convertisseur étant en contact permanent avec ledit premier convertisseur.

Ledit dispositif comprend en outre un support comprenant des espèces hydrogénées sur lequel sont positionnés lesdits premier et second convertisseurs, ledit support étant transparent audit rayonnement lumineux.

Ledit premier matériau comprend du dysprosium.

Ledit second convertisseur comprend un matériau scintillateur qui est un composé à base de gadolinium pouvant être de type Gd₂O₂S (Tb) (pouvant être dopé avec du terbium).

Selon une variante de l'invention, le matériau scintillateur est mélangé à un liant organique.

Selon une variante de l'invention, l'épaisseur du premier convertisseur est de l'ordre d'une centaine de microns.

Selon une variante de l'invention, l'épaisseur du second convertisseur est de l'ordre d'une dizaine de microns.

Selon une variante de l'invention, le support transparent comprenant des espèces hydrogénées est de type polymétacrylate de méthyle, pouvant avoir une épaisseur de l'ordre de quelques millimètres.

L'invention a aussi pour objet un système étanche comprenant un caisson étanche audit milieu, incorporant le dispositif selon l'invention.

Selon une variante de l'invention, le caisson est en matériau faiblement activable par un flux neutronique, pouvant être un alliage d'aluminium.

L'invention a encore pour objet un procédé d'imagerie neutronique en milieu immergé et utilisant le système étanche de l'invention caractérisé en ce qu'elle comprend les étapes suivantes :
- l'immersion dudit système étanche dans un milieu liquide comprenant des espèces à analyser ;
- l'irradiation dudit système par un flux de neutrons ;
- le retrait dudit système dudit milieu liquide ;
- le retrait dudit caisson étanche ;
- l'enregistrement de la scintillation générée par le second convertisseur.

Avantageusement, l'objet à analyser ne se trouve pas lui-même directement dans le milieu liquide qui peut-être de l'eau, il est introduit dans une chambre, située entre le bout d'un collimateur et la cassette d'irradiation. Cette chambre est remplie d'air comprimé pour y chasser l'eau.

Selon une variante de l'invention, les espèces à analyser sont des combustibles nucléaires irradiés ou non dans le cas d'examens neutronographiques réalisés avant irradiation.

L'invention sera mieux comprise et d'autres avantages apparaîtront à la lecture de la description qui va suivre donnée à titre non limitatif et grâce aux figures parmi lesquelles :
- la figure 1 illustre un dispositif d'imagerie neutronique selon l'art connu ;
- la figure 2 illustre un système étanche selon l'invention et incorporant un premier convertisseur et un second convertisseur ;
- la figure 3 illustre une étape d'enregistrement de la scintillation issue du second convertisseur dans un procédé d'imagerie neutronique selon l'invention.

La présente invention va être décrite dans le cadre de l'analyse par imagerie neutronique d'objets irradiants en réacteur piscine mais peut aussi bien être déclinée dans le cas de contrôle non destructif d'espèces immergé dans un milieu.

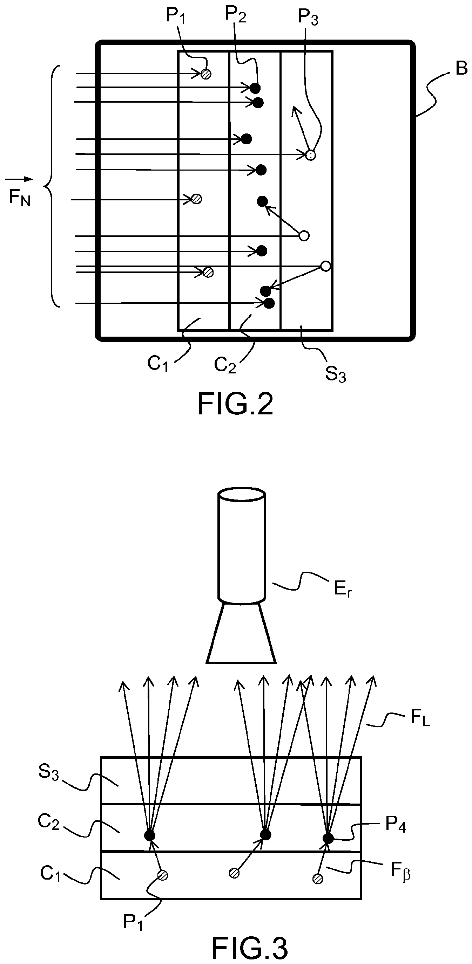

La figure 2 illustre un exemple de dispositif utilisé dans la présente invention et destiné à être immergé dans la piscine d'un réacteur produisant des neutrons. Le dispositif comprend un premier convertisseur C₁, un second convertisseur C₂, en contact avec le premier convertisseur. Selon cet exemple, le second convertisseur est à la surface d'un support S₃. Lorsqu'un flux de neutrons F_{N} traverse l'ensemble du dispositif, il rencontre des sites de captures neutroniques P₁ dans le premier matériau du premier convertisseur, des sites de capture neutroniques P₂ dans le second matériau du second convertisseur C₂ et des sites de ralentissement neutronique P₃ dans le matériau du support S₃.

Le matériau du premier convertisseur est tel qu'il est susceptible de générer un rayonnement β rémanent de durée de déclin typiquement de quelques heures.

Le premier convertisseur est collé en contact étroit avec un second convertisseur bêta-lumière (scintillateur) qui possède en outre une forte absorption neutronique. Ce second convertisseur a ainsi un rôle triple :
- lorsque positionné en piscine réacteur dans la cassette d'irradiation lors de l'irradiation neutronographique, réduire l'activation de la cassette par l'absorption du flux neutronique thermique résiduel ayant traversé le convertisseur primaire (environ 85% du flux), il est alors utilisé comme un blindage neutronique de protection des structures activables situées en aval du flux neutronique (face arrière de la cassette d'irradiation) ;
- toujours lors de l'irradiation neutronographique, réduire le bruit sur l'image finale et ainsi améliorer la qualité de l'image par l'absorption du flux neutronique parasite provenant d'éventuelles diffusions ayant eu lieu en aval du convertisseur primaire ;
- une fois transféré hors piscine et hors flux neutronique, fournir une image neutronographique via la conversion des rayonnements bêta émis par le convertisseur primaire activé et l'enregistrement de son signal de scintillation. Son contact intime avec le convertisseur primaire permet d'assurer une homogénéité et une résolution spatiale de l'image optimales.

L'ensemble convertisseur primaire et convertisseur secondaire sont de plus appliqués sur un support rigide transparent, ce support rigide transparent possède un rôle triple :
- permettre la manipulation aisée de l'ensemble en apportant une rigidité à la plaque de grande dimensions mais de très faible épaisseur ;
- réduire l'impact de l'activation de la cassette d'irradiation par les neutrons rapides en ralentissant les neutrons rapides via ses composés hydrogénés ;
- assurer une protection biologique renforcée lors de la manutention de l'ensemble par l'absorption du rayonnement bêta résiduel provenant du convertisseur primaire et sans absorber le signal lumineux issu du convertisseur secondaire.

Le dispositif ainsi réalisé est intégré dans un caisson étanche B comme illustré en figure 2 de manière à constituer un système parfaitement étanche permettant l'immersion de l'ensemble des deux convertisseurs sans dégradation et interaction avec le milieu d'immersion. Le rôle de l'étanchéité est aussi d'éviter que les neutrons ne rencontrent de l'eau sur leur trajet entre le début du collimateur et le convertisseur, sans quoi pas d'image correcte possible.

Sont donc étanches et remplis de gaz (hélium ou air) : le collimateur, la chambre accueillant l'objet inspecté et la cassette accueillant les convertisseurs.

Pour réaliser l'enregistrement de la scintillation, le caisson étanche est extrait du milieu d'immersion et le support et convertisseurs en sont retirés.

La figure 3 illustre l'étape d'enregistrement de la scintillation par un dispositif de type caméra Eᵣ, l'image est en effet produite par l'enregistrement de la scintillation produite par le convertisseur secondaire, ladite caméra étant positionnée en vue directe de la surface du support transparent recouvrant le convertisseur secondaire, sans avoir recours à un système de renvoi d'image, simplifiant efficacement ce type de méthodes de lecture appliquées couramment en neutronographie par méthode directe qui imposent l'utilisation d'un miroir (utilisé pour protéger l'électronique de la caméra du rayonnement neutron ou gamma résiduel en la positionnant hors-axe).

La figure 3 met en évidence le rayonnement bêta rémanent F_{β}, en raison du temps de déclin de ce rayonnement de plusieurs heures au niveau des centres de captures P₁, l'émission de ce rayonnement bêta rémanent, permettant à son tour de générer au niveau des centres de scintillation P₄, un rayonnement lumineux F_{L}.

Le premier matériau du premier convertisseur peut être constitué de Dysprosium par exemple, l'épaisseur du convertisseur pouvant être de l'ordre de 150 µm.

Le second matériau du second convertisseur peut comprendre du Gd₂O₂S(Tb) (Gadox) mélangé à un liant organique par exemple. L'épaisseur du second convertisseur peut être de l'ordre de 10 µm.

Le support transparent peut être constitué de Plexiglas® (polymétacrylate de méthyle ou PMMA) d'épaisseur 5 mm.

Le rôle de blindage de la cassette d'irradiation et d'absorbant de neutrons diffusés est ainsi assuré à la fois par le convertisseur neutrophage C₂ et le support S₃.

La solution proposée a l'avantage de permettre de réduire le coût du système par l'utilisation d'un élément jouant plusieurs rôles, tout en évitant l'emploi de matériaux neutrophages toxiques (Cadmium) en contact de l'opérateur.

La mise en contact étroit des deux convertisseurs et du support hydrogéné transparent rigide lors de la fabrication permet d'assurer l'obtention d'une très bonne résolution spatiale, grâce à l'épaisseur réduite nécessaire pour le convertisseur secondaire (environ 10 µm, sans avoir besoin de couche superficielle additionnelle entre les surfaces des deux convertisseurs). Un gain d'un facteur 2 sur la résolution spatiale est ainsi atteignable par rapport à la méthode actuelle permettant la meilleure résolution spatiale (transfert d'un convertisseur primaire sur un film radiographique de faible épaisseur).

Elle a également l'avantage de réduire considérablement la durée du processus de mesure en éliminant le recours à une mise en contact de deux éléments (utilisation de boîte à vide, ...).

En outre, la capacité d'absorption des neutrons du convertisseur C₂ participe avantageusement à l'obtention d'une image de bonne qualité par la suppression des neutrons parasites rétrodiffusés depuis l'arrière du dispositif vers le convertisseur C₁.

L'utilisation d'un support hydrogéné transparent non activable permet avantageusement de réduire l'activation de la cassette qui serait due à des réactions de neutrons rapides (réactions d'activation nucléaires de type (n,p) ou (n,2n)) (n thermalisant la partie rapide du spectre des neutrons incidents, ce qui permet d'utiliser un spectre neutronique comportant des neutrons de toutes énergies.

Ces réactions sont des réactions de types de réactions d'activation produisant des éléments radioactifs à partir de neutrons rapides incidents et correspondant respectivement :
- (n,p) à la production d'un isotope ayant un numéro atomique inférieur de 1, avec conservation du nombre de masse ;
- (n,2n) production d'un isotope conservant le même numéro atomique, mais avec un nombre de masse inférieur de 1 ;

Ces réactions n'existent qu'au-delà d'une certaine énergie des neutrons, les neutrons énergétiques, rapides.

La protection biologique du support hydrogéné transparent contre les rayonnements bêta issus du convertisseur primaire après transfert hors piscine offre la possibilité d'une manipulation pas ou très peu dosante pour l'opérateur.

La transparence du support hydrogéné vis-à-vis de la lumière de scintillation émise par le convertisseur secondaire permet d'imager directement la totalité de la surface correspondant au convertisseur primaire sans avoir à utiliser une optique complexe et sans nécessiter une étape additionnelle de numérisation comme c'est le cas dans les méthodes utilisées actuellement.

## Revendications

1. Dispositif destiné à être utilisé pour réaliser de l'imagerie neutronique en immersion dans un milieu contenant des espèces à analyser, **caractérisé en ce qu'**il comprend :
- un premier convertisseur (C₁) comprenant un premier matériau capable de convertir un rayonnement de neutrons thermiques en rayonnement bêta rémanent par son activation neutronique, ledit premier matériau comprenant du dysprosium ;
- un second convertisseur (C₂) comprenant un second matériau capable d'absorber un rayonnement de neutrons thermiques par capture et capable de convertir un rayonnement bêta rémanent en rayonnement lumineux, ledit second convertisseur étant en contact avec ledit premier convertisseur, ledit second convertisseur comprenant un matériau scintillateur qui est un composé à base de gadolinium, pouvant être de type Gd₂O₂S (dopé Tb),
les premier et second convertisseurs étant en contact étroit l'un avec l'autre ; et
- un support (S₃) comprenant des espèces hydrogénées sur lequel est positionné ledit second convertisseur, ledit support étant transparent audit rayonnement lumineux.

2. Dispositif destiné à être utilisé en imagerie neutronique selon la revendication 1, **caractérisé en ce que** le matériau scintillateur est mélangé à un liant organique.

3. Dispositif destiné à être utilisé en imagerie neutronique selon l'une des revendications précédentes, **caractérisé en ce que** l'épaisseur du premier convertisseur est de l'ordre d'une centaine de microns.

4. Dispositif destiné à être utilisé en imagerie neutronique selon l'une des revendications précédentes, **caractérisé en ce que** l'épaisseur du second convertisseur est de l'ordre d'une dizaine de microns.

5. Dispositif destiné à être utilisé en imagerie neutronique selon l'une des revendications 1 à 4, **caractérisé en ce que** le support comprend un matériau transparent, avec des espèces hydrogénées, de type polymétacrylate de méthyle, ledit support pouvant avoir une épaisseur de l'ordre de quelques millimètres.

6. Système étanche destiné à être utilisé en imagerie neutronique en milieu immergé **caractérisé en ce qu'**il comprend un dispositif selon l'une des revendications 1 à 5 et un caisson étanche (B) audit milieu, incorporant le premier convertisseur (C₁), le second convertisseur (C₂), et le support (S₃).

7. Procédé d'imagerie neutronique en milieu immergé et utilisant un système selon la revendication 6, **caractérisé en ce qu'**elle comprend les étapes suivantes :
- l'immersion dudit système dans un milieu liquide comprenant des espèces à analyser ;
- l'irradiation dudit système par un flux de neutrons ;
- le retrait dudit système dudit milieu liquide ;
- le retrait desdits convertisseurs dudit caisson étanche ;
- l'enregistrement de la scintillation générée par le second convertisseur (C₂).

8. Procédé d'imagerie neutronique selon la revendication 7, **caractérisé en ce que** les espèces à analyser sont des combustibles nucléaires.

## Patentansprüche

1. Vorrichtung zur Verwendung zum Durchführen von Neutronenbildgebung eingetaucht in einem Medium, das zu analysierende Spezies enthält, **dadurch gekennzeichnet, dass** sie Folgendes umfasst:
- einen ersten Wandler (C₁), der ein erstes Material umfasst, das eine thermische Neutronenstrahlung durch Neutronenschallaktivierung in persistente Betastrahlung umwandeln kann, wobei das erste Material Dysprosium beinhaltet;
- einen zweiten Wandler (C₂), der ein zweites Material umfasst, das eine thermische Neutronenstrahlung durch Einfangen absorbieren und eine persistente Betastrahlung in Lichtstrahlung umwandeln kann, wobei der zweite Wandler mit dem ersten Wandler in Kontakt ist, wobei der zweite Wandler ein Szintillatormaterial umfasst, das eine Verbindung auf Gadoliniumbasis ist, die vom Typ Gd₂O₂S (Tb-dotiert) sein kann,
wobei der erste und der zweite Wandler in engem Kontakt miteinander sind; und
- einen Träger (S₃), der hydrierte Spezies umfasst, auf denen der zweite Wandler positioniert ist, wobei der Träger für die Lichtstrahlung durchlässig ist.

2. Vorrichtung zur Verwendung bei Neutronenbildgebung nach Anspruch 1, **dadurch gekennzeichnet, dass** das Szintillatormaterial mit einem organischen Bindemittel gemischt ist.

3. Vorrichtung zur Verwendung in der Neutronenbildgebung nach einem der vorherigen Ansprüche, **dadurch gekennzeichnet, dass** die Dicke des ersten Wandlers in der Größenordnung von hundert Mikron liegt.

4. Vorrichtung zur Verwendung in der Neutronenbildgebung nach einem der vorherigen Ansprüche, **dadurch gekennzeichnet, dass** die Dicke des zweiten Wandlers in der Größenordnung von zehn Mikron liegt.

5. Vorrichtung zur Verwendung in der Neutronenbildgebung nach einem der Ansprüche 1 bis 4, **dadurch gekennzeichnet, dass** der Träger ein transparentes Material umfasst, mit hydrierten Spezies, vom Polymethylmetacrylattyp, wobei der Träger eine Dicke in der Größenordnung von einigen Millimetern haben kann.

6. Undurchlässiges System zur Verwendung in der Neutronenbildgebung eingetaucht in einem Medium, **dadurch gekennzeichnet, dass** es eine Vorrichtung nach einem der Ansprüche 1 bis 5 und ein für das Medium undurchlässiges Gehäuse (B) umfasst, das den ersten Wandler (C₁), den zweiten Wandler (C₂) und den Träger (S₃) beinhaltet.

7. Neutronenbildgebungsverfahren eingetaucht in einem Medium unter Verwendung eines Systems nach Anspruch 6, **dadurch gekennzeichnet, dass** es die folgenden Schritte beinhaltet:
- Eintauchen des Systems in ein flüssiges Medium, das zu analysierende Spezies umfasst;
- Bestrahlen des Systems mit einem Neutronenfluss;
- Herausnehmen des Systems aus dem flüssigen Medium;
- Herausnehmen der Wandler aus dem undurchlässigen Gehäuse;
- Aufzeichnen der durch den zweiten Wandler (C₂) erzeugten Szintillation.

8. Neutronenbildgebungsverfahren nach Anspruch 7, **dadurch gekennzeichnet, dass** die zu analysierenden Spezies Kernbrennstoffe sind.

## Claims

1. A device designed to be used for neutron imaging immersed in a medium containing specimens to be analyzed, **characterized in that** it comprises:
- a first converter (C₁) comprising a first material capable of converting thermal neutron radiation into remnant beta radiation by its neutron activation, said first material comprising dysprosium;
- a second converter (C₂) comprising a second material capable of absorbing thermal neutron radiation by capture and capable of converting a remnant beta radiation into light radiation, the said second converter being in contact with the said first converter,
said second converter comprising a scintillator material which is a gadolinium-based compound which can be of Gd₂O₂S type (doped with Tb),
the first and second converters being in close contact with each other; and
- a support (S₃) comprising hydrogenated species on which the said second converter is positioned, the said support being transparent to said light radiation.

2. The device designed to be used in neutron imaging according to claim 1, **characterized in that** the scintillator material is mixed with an organic binder.

3. The device designed to be used in neutron imaging according to one of the preceding claims, **characterized in that** the thickness of the first converter is of the order of a hundred microns.

4. The device designed to be used in neutron imaging according to one of the preceding claims, **characterized in that** the thickness of the second converter is of the order of ten microns.

5. The device designed to be used in neutron imaging according to one of claims 1 to 4, **characterized in that** the support comprises a transparent material, with hydrogenated species, of the polymethylmethacrylate type, where the said support can have a thickness of the order of a few millimeters.

6. A leak-tight system designed to be used in neutron imaging immersed in a medium **characterized in that** it comprises a device according to one of claims 1 to 5 and a vessel (B) leak-tight to said medium, incorporating the first converter (C₁), the second converter (C₂), and the support (S₃).

7. A method for neutron imaging immersed in a medium and using a system according to claim 6, **characterized in that** it comprises the following steps:
- the immersion of the said system in a liquid medium comprising specimens to be analyzed;
- the irradiation of the said system by a flux of neutrons;
- the removal of the said system from the said liquid medium;
- the removal of the said converters from the said leak-tight vessel;
- the recording of the scintillation generated by the second converter (C₂).

8. The neutron imaging method according to claim 7, **characterized in that** the specimens to be analyzed are nuclear fuels.
